# FASCICULE DE BREVET EUROPEEN

(11) **EP 1 543 635 B1**
(45) Date de publication et mention de la délivrance du brevet: **25.05.2011**
(21) Numéro de dépôt: 03767918.0
(22) Date de dépôt: 14.08.2003
(51) Int. Cl.: H04B 3/54

(54) **INSTALLATION DE DISTRIBUTION DE SIGNAUX NUMERIQUES**
INSTALLATION ZUR VERTEILUNG VON DIGITALEN SIGNALEN
INSTALLATION FOR DISTRIBUTING DIGITAL SIGNALS

(30) Priorité: 14.08.2002 FR 0210344
(43) Date de publication de la demande: 22.06.2005
(73) Titulaire: Laboratoire Europeen ADSL Leacom Fastnet, 92400 Courbevoie (FR)
(72) Inventeur: FERNANDEZ, Thierry, F-92400 Courbevoie (FR)
(74) Mandataire: Schmit, Christian Norbert Marie
(86) Numéro de dépôt international: PCT/FR2003/050029
(87) Numéro de publication internationale: WO 2004/017535

(56) Documents cités:
- WO-A-01/35544
- WO-A-95/19070
- FR-A- 2 797 131
- GB-A- 2 313 273
- GB-A- 2 348 787
- US-A- 6 040 759
- US-A- 6 141 356
- US-A1- 2002 090 010

## Description

La présente invention a pour objet une installation de distribution de signaux numériques notamment de signaux numériques véhiculés au préalable par une ligne téléphonique et transmis selon une technique de type ADSL, ou plus généralement XDSL pour correspondre à toutes les variantes de ce type de transmission. Dans la suite de l'exposé on parlera de transmission de type ADSL, Asynchronous Digital Subscriber Line, ligne d'abonné de transmission numérique asynchrone. Cette technique est une technique par laquelle une même ligne téléphonique, souvent une paire torsadée, transmet des signaux sur différentes gammes de fréquences. Une première gamme de fréquence est située entre 0 KHz et environ 35 KHz ou entre 0 KHz et environ 100 KHz pour la transmission téléphonique, classique ou numérique respectivement. Une deuxième gamme de fréquence s'étalant d'environ 100 KHz à 3 MHz théoriquement, et en pratique jusqu'à 1,2 MHz, est utilisée pour transmettre des signaux numériques à haut débit.

La technique de transmission ADSL correspond d'une part à un besoin, celui de transmettre des informations numériques à haut débit (dans la deuxième gamme de fréquence) et d'autre part à une utilisation des infrastructures existantes. Des paires torsadées relient déjà les abonnés aux centraux téléphonique. Elles ont été installées au cours des décennies précédentes. La technique ADSL présente par rapport à la technique de boucle locale radiofréquence, de faisceau hertzien, ou de transmission par fibre optique, l'avantage très important de ne demander aucune construction d'infrastructure supplémentaire, et de permettre par ailleurs des débits tout à fait confortables et certainement suffisants.

Un des problèmes rencontrés pour une installation de transmission de signaux numériques, notamment une installation domestique, se situe dans la manière dont ont été équipés les maisons ou les bureaux professionnels, En effet, autant ces locaux sont équipés, en de multiples endroits, de prises de raccordement électrique pour y brancher tous les appareils désirables, autant le nombre et la répartition des arrivées téléphoniques ne sont pas aussi bien organisés. Il en résulte que les lieux d'installation d'un équipement exploitant des informations transmises par une ligne ADSL sont imposés dans un local à l'endroit où des arrivés téléphoniques sont disponibles. En pratique, dans une habitation ou un bureau à équiper, le taux de répartition des prises de courant est de l'ordre de 0,5 prises de courant par mètre carré alors que le taux de répartition des prises téléphoniques est de l'ordre de 0,01 par mètre carré.

Dans ces conditions, il a été imaginé de réaliser des installations nouvelles de distribution de signaux numériques provenant d'une ligne ADSL. Ces installations nouvelles comportent un circuit de couplage des signaux transmis par la ligne ADSL à un réseau électrique local, celui d'une maison par exemple. La transmission se réalise alors par courants porteurs. En tous autres endroits où est située une prise de courant électrique, il est alors possible d'installer non seulement un organe d'exploitation de signaux numériques, typiquement un micro-ordinateur, mais également un modem, en particulier un modem de type ADSL, muni lui aussi d'un coupleur pour venir prélever ou injecter des signaux numériques sur la ligne de distribution d'énergie électrique. En définitive, une telle installation revient à disposer un coupleur en amont, typiquement près d'une arrivé téléphonique quelconque qui seraient elle-même proche d'une prise de courant électrique, par exemple avec une proximité de l'ordre d'une dizaine ou d'une cinquantaine de centimètres. Puis en tous autres endroits des locaux il est possible d'installer l'autre équipement pour jouir de la distribution dans la totalité de l'installation.

Dans la pratique, on s'est rendu compte toutefois que ce type d'installation ne fonctionnait pas aussi efficacement qu'on le souhaitait. En effet, on a effectué des tests avec des modems ADSL raccordés à un coupleur alors que par ailleurs un autre coupleur distant prélevait des signaux ADSL sur une ligne téléphonique et les injectait sur une ligne de distribution électrique. Ces tests ont montré que l'installation fonctionnait bien. Par contre, lorsqu'on veut exploiter les signaux produits par le modem dans un micro-ordinateur branché sur le réseau des problèmes apparaissent. Ces problèmes se manifestent sous la forme d'un taux d'erreurs bits nettement accru par rapport à une utilisation à vide. L'origine de ces problèmes est inexpliquée. En conséquence le problème principal à résoudre par la présente invention est celui de rendre réel une solution qui théoriquement est possible.

Dans l'invention on s'est rendu compte alors que tous les équipements électroniques utilisés et connectés sur le réseau à proximité du coupleur possédaient un circuit d'alimentation électrique capable de transformer un signal électrique secteur, typiquement de 220 volts alternatifs (en quelques endroits 110 volts alternatifs) en une gamme de tensions continues, étagées entre trois et douze volts. On s'est rendu compte dans l'invention que ces circuits d'alimentation se présentaient, sur le plan de leur schéma équivalent, sous la forme d'un condensateur directement en parallèle sur la ligne de distribution d'énergie électrique. Le condensateur de ce schéma équivalent est raccordé à deux inductances en série dans chacune des branches (dans le cas monophasé). Un tel circuit de type réactif est accordé pour se comporter comme une résistance pure à 50 Hz ou 60Hz, fréquence d'oscillation du signal d'énergie électrique de puissance. Dans les gammes utilisées par les transmissions ADSL, entre 100 KHz et 1,2 MHz, ces circuits d'alimentation se comportent par contre comme des courts circuits. En conséquence, on comprend les raisons pour lesquelles les transmissions dans ces gammes de fréquences ne sont pas du tout efficaces. Le signal disponible à l'entrée ou à la sortie ligne du modem ADSL est amorti.

Dans l'invention, pour résoudre alors ce problème, on a prévu de munir le coupleur d'une alimentation en énergie électrique de puissance pour alimenter des équipements exploitant les transmissions ADSL. Cette alimentation en énergie électrique de puissance comporte un circuit de filtrage interposé entre les circuits d'alimentation électrique des organes exploitant les signaux et la ligne principale de distribution électrique dans les locaux. En pratique, on constitue une ligne auxiliaire de distribution électrique située de l'autre coté de ce circuit de filtrage par rapport à la ligne principale de distribution électrique.

Il en résulte que les appareils exploitant les signaux ADSL ne viennent plus former des courts circuits, dans les gammes de fréquence ADSL, sur la ligne de distribution électrique principale. Le circuit de couplage par courants porteurs, étant situé en amont de ce circuit de filtrage, fonctionne donc correctement.

En ce qui concerne les autres équipements installés par ailleurs dans les mêmes locaux, on a constaté que, sous réserve qu'ils soient assez éloignés d'une prise de courant ainsi équipée du circuit de filtrage, les courts circuits que leur circuit d'alimentation pourrait rapporter ne sont pas aussi gênants que celui qu'on a neutralisé. En effet, même si un équipement de ce type est branché en un autre endroit dans les mêmes locaux, et même s'il rapporte dans les gammes de fréquences concernées une faible impédance à l'endroit de sa propre connexion sur la ligne de distribution électrique, cette faible impédance est vue du circuit de couplage comme l'impédance caractéristique de ligne, ou comme une fraction non négligeable de cette impédance caractéristique. Cette fraction d'impédance caractéristique est bien entendu différente de zéro. Pour les fréquences utilisées, la longueur d'onde est au minimum de 100 mètres (à 3 MHz). Compte tenu de la nature des diverses réflexions de propagation qui se produisent dans différentes extrémités des réseaux de distributions électriques, de tels courts circuits distants ne sont pas rapportés à l'endroit du prélèvement par le coupleur des signaux ADSL avec le modem.

En conséquence l'invention a pour objet une installation de distribution de signaux numérique comportant
- un modem de type ADSL avec un premier et un deuxième port
- un premier coupleur à relier d'une part au premier port du modem et d'autre part à une ligne de distribution d'énergie électrique,
   caractérisée en ce qu'elle comporte
- une ligne auxiliaire de distribution d'énergie électrique,
- un circuit de filtrage interposé entre la ligne de distribution d'énergie électrique et la ligne auxiliaire de distribution d'énergie électrique,
- un même boîtier pour contenir le circuit de filtrage et le premier coupleur, et en ce que
- la ligne auxiliaire de distribution d'énergie électrique comporte une multiplicité de prises électriques normalisées.

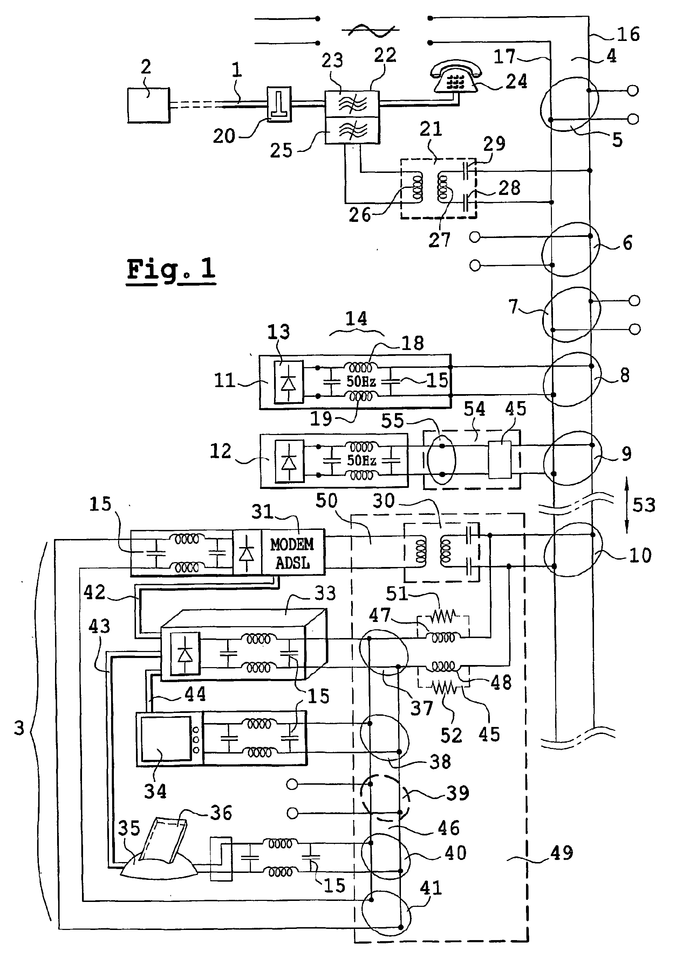

L'invention sera mieux comprise à la lecture de la description qui suit et à l'examen des figures qui l'accompagne. Celles-ci ne sont présentées qu'à titre indicatif et nullement limitatif de l'invention. La figure 1 unique montre :
- figure 1 : la représentation d'une installation de distribution de signaux numériques selon l'invention.

La figure 1 montre une installation de distribution de signaux numériques selon l'invention. Cette installation est destinée à transmettre des signaux reçus par une ligne téléphonique 1 reliée par ailleurs à un central téléphonique distant 2 de type public et situé par exemple à un ou deux kilomètres des locaux dans lesquels l'installation est installée. Ces signaux sont destinés à un équipement 3 comportant des circuits d'exploitation de signaux ADSL véhiculés par la ligne 1. L'installation est destinée à être connectée à une ligne 4 de distribution d'énergie électrique à l'intérieur des locaux, un domicile d'un particulier ou des locaux de bureaux d'une entreprise, voire ceux d'une usine. La ligne 4 comporte de nombreuses ramifications, ici non représentées, et sur chacune de ces ramifications des prises électriques telles que 5 à 10. Certaines prises, telles que 5 à 7, ne sont pas utilisées par des équipements. D'autres, telles que 8 et 9 sont utilisées par des équipements de tous types tels que 11 et 12. Ces équipements peuvent être une installation de télévision, une centrale d'alarme, un four à micro-ondes, un chauffage électrique et ainsi de suite. Pour certains de ces équipements, en particulier lorsqu'ils sont de type électronique, ils nécessitent la présence d'un circuit 13 d'alimentation électrique relié à la ligne 4 par l'intermédiaire d'un circuit de connexion. Le schéma équivalant 14 de cet ensemble comporte un condensateur d'entrée 15, en parallèle avec les deux branches 16 et 17 de la ligne 4 et deux inductances 18 et 19 en série avec chacune de ces branches. Comme indiqué précédemment, le fonctionnement de ce circuit 13 est tel que, à 50 Hz ou 60 Hz, il se comporte comme une impédance pure, non réactive. Par contre, en hautes fréquences seul le condensateur 15 est vu, et on peut considérer qu'à l'endroit d'une prise de courant 8 concernée, un court circuit peut être rapporté.

L'installation de l'invention comporte selon ce qui a été indiqué précédemment, à proximité d'une arrivée 20 de la ligne 1 et d'une prise 5 connectée à la ligne 4, un coupleur 21 relié d'une part à la ligne 1 et d'autre part à la ligne 4. En pratique, compte tenu de ce qu'une la ligne téléphonique 1 servira également pour des transmissions de signaux téléphoniques classiques, analogiques ou numériques, un circuit séparateur 22 sera installé entre la ligne 1, un conjoncteur 20, et le circuit de couplage 21. Ce séparateur comporte d'une manière classique un premier filtre passe-bas 23 relié en entrée à la ligne 1 et en sortie à une installation téléphonique 24, ici schématiquement représentée. Le séparateur 22 comporte également un filtre passe-haut 25 relié en entrée à la ligne 1 et en sortie au coupleur 21. Le coupleur 21 est un coupleur de type classique, comportant dans son principe un enroulement primaire 26 et un enroulement secondaire 27 d'un transformateur, ainsi que de préférence un certain nombre de composant tels que des condensateurs 28 et 29 permettant une meilleure adaptation en fréquence du couplage.

Les installations connues comportent par ailleurs un deuxième coupleur 30, du même type que le coupleur 21, et connecté d'une part à la ligne 4 sur une prise 10, et d'autre part à un modem ADSL 31. Le dispositif 3 d'exploitation des signaux ADSL comporte dans un exemple un micro-ordinateur 33 avec son clavier (non représenté), un écran de visualisation 34 et divers périphériques telle qu'une imprimante (non représentée) ou une console de connexion 35 d'un assistant personnel 36 à mettre en relation avec l'ordinateur 33. On notera que le modem 31 doit lui-même être alimenté. Compte tenu de la présence d'autres équipements, de type magnétophone, chargeur de téléphone portable, radio réveil etc.., Il est possible que, dans l'environnement proche du circuit 30, se trouve ainsi un nombre important de prises de courant électrique telles que 37 à 41 reliées toutes à un circuit d'alimentation du même type que celle 13 de l'appareil 11. Tous les organes de l'équipement 3 sont par ailleurs mis en relation entre eux par des connexions de transmissions de données telles que 42 à 44. La proximité impliquée ci-dessus est une proximité de l'ordre de un à deux mètres.

Pour éviter que les alimentations des appareils 31, 33, 34, 35 et autres ne forment un court circuit fatal pour la transmission des signaux de type ADSL sur la ligne 4, dans l'invention on prévoit de mettre en place un circuit de filtrage 45 en position intermédiaire entre la ligne 4 de distribution principale d'énergie électrique et une ligne auxiliaire 46 de distribution d'énergie électrique. Les prises de courant 37 à 41 sont montées sur la ligne auxiliaire 46. Le circuit filtrage 45 est très simple. Dans son principe il comporte au moins une inductance telle que 47 montée sur au moins une des branches raccordant un brin de la ligne 4 à un brin de la ligne 46. De préférence il comportera une autre inductance 48 montée sur l'autre branche reliant le deuxième brin de la ligne 4 au deuxième brin de la ligne 46.

Si au lieu d'une ligne 4 monophasée on affaire à une ligne triphasée, le montage serait de même type. Il aurait tout simplement, notamment pour des rayons d'équilibre, trois inductances en série montées sur chacun des brins raccordés aux brins de la ligne 4.

Le fonctionnement de ce dispositif est le suivant. En basse fréquence, notamment à 50 Hz et 60Hz, les inductances 47 et 48 sont vues comme des courts circuits. Elles ne gênent en rien la transmission des ondes électriques, d'autant que la consommation électrique des appareils électronique est faible, de 10 à 100 watts. Il en résulte que les équipements 31, 33, 34 et 35 sont alimentés normalement. Par contre, en haute fréquence, les inductances 47 et 48 sont vues comme des impédances de grandes valeurs. En conséquence, le schéma équivalant résultant de la présence de ces impédances 47 et 48 en série avec l'un quelconque des condensateurs 15 d'entré des alimentations des appareils 31, 33, 34 et 35 est vu, de la ligne 4, comme une impédance haute, malgré la présence des courts circuits 15. Il résulte de cette situation que, sur la ligne 4, les signaux de type ADSL ne sont pas amortis par les circuits d'alimentation des organes de l'installation 3. Ces signaux ADSL sont donc normalement prélevés sur la ligne principale 4 par le coupleur 30. Ils sont aussi normalement transmis au modem 31 qui les exploite et les transmet par sa connexion 42 au micro-ordinateur 33.

Sur le plan pratique, pour faciliter l'utilisation, on prévoit de rassembler le coupleur 30, le circuit de filtrage 45, et la ligne auxiliaire 46 avec ses prises de courant 37 à 41, dans un seul boîtier 49. Un tel boîtier 49, qui se présente alors comme une multi-prise de type classique comporte les prises 37 à 41, normalement de type femelle, en parallèle sur la ligne 46, ainsi qu'une prise mâle pour pouvoir s'enficher dans la prise femelle 10 montée sur la ligne 4. Les prises de courants 37 à 41 sont normalisées selon des formats régionalement acceptés. Par ailleurs le boîtier 49 comporte un port 50, en particulier de type RJ 11, pour se connecter au modem 31. Il est toutefois possible de prévoir l'équipement différemment, notamment de prévoir le circuit de filtrage 45, la ligne auxiliaire 46 et les prises de courant 37 à 41 dans un même boîtier alors que le coupleur 30 serait dans un autre boîtier. Il est également possible d'associer seulement dans un même boîtier le coupleur 30 et le circuit de filtrage 45, ou le coupleur 30 et la ligne 46.

De manière à assurer un fonctionnement optimal du circuit de filtrage 45, celui-ci est accordé, autant que faire se peut, en tenant compte des valeurs de capacité des condensateurs 15 mis en parallèle avec lui. Dans la pratique, une valeur typique de capacité des condensateurs d'entrée 15 est de l'ordre de 50 nF. En supposant la présence de quatre équipements, la capacité rapportée aux bornes des inductances 47 et 48 est de l'ordre de 200 nF. On accorde alors le circuit oscillant ainsi constitué par les inductances et la capacité rapportée pour que sa fréquence de résonance soit très inférieure aux fréquences d'utilisation des signaux ADSL. Par exemple, puisque les signaux ADSL sont exploitables au-delà de 100 KHz, on s'arrange pour que la fréquence d'accord soit de l'ordre de 3 KHz. Ceci conduit à des valeurs des inductances 47 et 48 comprises entre 200% et 25% de 4 mH chacune.

Il est ainsi constitué un circuit oscillant du fait de cet accord. De préférence, on munit alors chaque inductance 47 et 48 d'une résistance en parallèle respectivement 51 et 52 pour éviter que le circuit oscillant ne possède un coefficient de surtension trop élevé, et ne réinjecte sur la ligne 4 des signaux qui pourraient gêner le fonctionnement de l'installation téléphonique 24.

L'installation ainsi réalisée fonctionne bien, pour peu qu'entre une prise de courant 9 à laquelle est branché un équipement électronique 12, muni d'une alimentation comme l'alimentation 13 gênante, et une prise 10 auquel sera connecté le boîtier 49 existe une distance 53 supérieure à un seuil, en pratique supérieure à cinq mètres. Eventuellement, si la distance 53 est trop faible, on prévoit dans l'invention de réaliser un circuit de filtrage tel que 45 associé, dans un boîtier 54, d'une part à une fiche mâle de connexion à une prise femelle 9 montée sur la ligne 4 et d'autre part à une prise femelle 55 pour recevoir la connexion d'un équipement électronique 12. La présence d'un tel boîtier 54 de connexion électrique n'est pas utile si l'appareil 11 branché sur une prise 8 est un appareil de consommation électrique classique, de type fer à repasser, four à micro-ondes ou autres ne comportant pas des dispositifs d'alimentation tel que 13, ou si la distance qui sépare la prise 8 de la prise 10 du modem ADSL est bien supérieure au seuil indiqué précédemment.

## Revendications

1. Installation de distribution de signaux numériques comportant
- un modem (31) de type ADSL avec un premier et un deuxième port
- un premier coupleur (31) à relier d'une part au premier port du modem et d'autre part à une ligne (4) de distribution d'énergie électrique, **caractérisée en ce qu'**elle comporte
- une ligne (46) auxiliaire de distribution d'énergie électrique,
- un circuit de filtrage (45) interposé entre la ligne de distribution d'énergie électrique et la ligne auxiliaire de distribution d'énergie électrique,
- un même boîtier (49) pour contenir le circuit de filtrage et le premier coupleur,
- la ligne auxiliaire de distribution d'énergie électrique comporte une multiplicité de prises (37-41) électriques normalisées,
- le circuit de filtrage comporte une inductance (47, 48) en série dans chacune des branches connectées aux connexions de la ligne de distribution d'énergie électrique, et
- chaque inductance est couplée avec une résistance (51, 52) parallèle.

2. Installation selon la revendication 1, **caractérisée en ce qu'**elle comporte un deuxième coupleur (21) à relier d'une part à une entrée de ligne de type ADSL et d'autre part à la ligne de distribution d'énergie électrique.

3. Installation selon l'une des revendications précédentes, **caractérisée en ce que** le deuxième coupleur est situé à l'endroit d'une arrivée d'une ligne (1) de transmission téléphonique.

4. Installation selon l'une des revendications précédentes, **caractérisée en ce qu'**elle comporte, dans l'entrée de ligne de type ADSL, un circuit séparateur (22) pour séparer des signaux de téléphonie de signaux ADSL.

5. Installation selon la revendication 1, **caractérisée en ce qu'**une inductance a une valeur telle qu'elle assure que la fréquence de résonance du circuit qu'elle forme avec une capacité d'entrée d'un circuit d'alimentation connecté à la ligne auxiliaire est très inférieure à 100 KHz, par exemple de l'ordre de 30 KHz, en pratique cette valeur est de l'ordre de 4 mH.

6. Installation selon l'une des revendications 1 à 5, **caractérisée en ce que** le circuit de filtrage présente, sur la ligne de distribution d'énergie électrique, dans la gamme des fréquences exploitées par les transmissions de type ADSL, une impédance supérieure à 2 kilohms.

7. Installation selon l'une des revendications précédentes, **caractérisée en ce que** le boîtier comporte en outre la ligne auxiliaire avec ses prises de courant.

8. Installation selon l'une des revendications précédentes, **caractérisée en ce que** le boîtier comporte en outre une prise RJ11 pour se connecter au modem.

9. Installation selon l'une des revendications précédentes, **caractérisée en ce que** la fréquence de résonnance du circuit oscillant, formé par l'inductance et un condensateur (15) mis en parallèle du circuit de filtrage, est limitée par ledit circuit de filtrage et l'inductance de sorte qu'elle soit inférieure à 100 KHz.

## Claims

1. A digital signal distribution installation comprising
- an ADSL-type modem (31) with a first and a second port
- a first coupler (31) to be connected on the one hand to the first port of the modem and on the other hand to an electric power distribution line (4), **characterised in that** it comprises
- an auxiliary electric power distribution line (46),
- a filtering circuit (45) interposed between the electric power distribution line and the auxiliary electric power distribution line,
- a single housing (49) to contain the filtering circuit and the first coupler,
- the auxiliary electric power distribution line comprises multiple standardised electrical sockets (37-41),
- the filtering circuit comprises an inductor (47, 48) in series in each of the branches connected to the connections of the electric power distribution line, and
- each inductor is coupled with a parallel resistor (51, 52).

2. An installation according to claim 1, **characterised in that** it comprises a second coupler (21) to be connected on the one hand to an ADSL-type line input and on the other hand to the electric power distribution line.

3. An installation according to one of the previous claims **characterised in that** the second coupler is located at an input for a telephone transmission line (1).

4. An installation according to one of the previous claims **characterised in that** it comprises, in the ADSL-type line input, a separator circuit (22) to separate telephony signals from ADSL signals.

5. An installation according to claim 1, **characterised in that** an inductor has an inductance value so as to ensure that the resonance frequency of the circuit that it forms with an input capacitance of a supply circuit connected to the auxiliary line is much lower than 100 KHz, for example approximately 30 KHz, said value in practice being approximately equal to 4 mH.

6. An installation according to one of claims 1 to 5, **characterised in that** the filtering circuit has, on the electric power distribution line, an impedance of more than 2 kilohms in the frequency range used for ADSL-type transmissions.

7. An installation according to one of the previous claims **characterised in that** the housing also comprises the auxiliary line with its electrical sockets.

8. An installation according to one of the previous claims **characterised in that** the housing also comprises an RJ11 socket to connect to the modem.

9. An installation according to one of the previous claims, **characterised in that** the resonance frequency of the oscillating circuit formed by the inductor and a condenser (15) positioned parallel to the filtering circuit, is limited by said filtering circuit and the inductor so as not to exceed 100 KHz.

## Patentansprüche

1. Verteilungseinrichtung digitalen Signalen aufweisend
- ein Modem (31) typ ADSL mit einem ersten und zweiten Anschluss
- eine erste Kopplung (31) einerseits an den ersten Anschluss des Modems und anderseits an eine elektrische Energieverteilungsleitung (4) zu verbinden,
**dadurch gekennzeichnet, dass** sie
- eine Begleitleitung (46) elektrischer Energieverteilung,
- eine Filterungsschaltung (45) zwischen der elektrischen Energieverteilungsleitung und der Begleitleitung elektrischer Energieverteilung eingesetzt,
- ein gleiches Gehäuse (49), um die Filterungsschaltung und der ersten Kopplungsanschluss zu beinhalten, aufweist
- die Begleitleitung elektrischer Energieverteilung weist eine Vielfältigkeit von Standardstecker (37- 41) auf,
- die Filterungsschaltung weist einer Induktivität (47,48) in Serie an jede der an die Verbindungen der elektrische Energieverteilungsleitung verbundene Stränge auf, und
- jede Induktivität ist an einen Parallelwiderstand (51,52) gekoppelt.

2. Einrichtung nach Patentanspruch 1, **dadurch gekennzeichnet, dass** sie eine zweite Kopplung (21) aufweist, einerseits an einen Leitungszulauf Typ ADSL und anderseits an der elektrische Energieverteilungsleitung zu verbinden.

3. Einrichtung nach einem der vorstehenden Ansprüche, **dadurch gekennzeichnet, dass** der zweite Kopplung sich an der Zulauf einer telefonischen Übertagungsleitung (1) befindet.

4. Einrichtung nach einem der vorstehenden Ansprüche **dadurch gekennzeichnet, dass** sie am Leitungszulauf Typ ADSL eine Trennschaltung (22) aufweist, um Telefon- und ADSL Signalen zu trennen.

5. Einrichtung nach Patentanspruch 1, **dadurch gekennzeichnet, dass** eine Induktivität ein Wert hat, so dass sie dafür sorgt, dass die Resonanzfrequenz der Schaltung, die sie mit einer Verbindungskapazität einer an die Begleitleitung verbundene Eingangsschaltung bildet, weit unter 100 kHz. liegt, zum Beispiel um die 30 kHz, in der Praxis liegt dieses Wert um die 4 mH.

6. Einrichtung nach einem der Patentansprüche 1 bis 5 **dadurch gekennzeichnet, dass** die Filterungsschaltung am elektrischen Energieverteilungsleitung vom Typ ADSL Übertragungen betriebenen Frequenzband, eine Impedanz höher als 2 Kilo-Ohms zeigt.

7. Einrichtung nach einem der vorstehenden Patentansprüche, **dadurch gekennzeichnet, dass** das Gehäuse zusätzlich die Begleitleitung mit dessen Steckdosen aufweist.

8. Einrichtung nach einem der vorstehenden Patenansprüche **dadurch gekennzeichnet, dass** das Gehäuse zusätzlich einen RJ 11 Stecker, um sich am Modem zu verbinden aufweist.

9. Einrichtung nach einem der vorstehenden Patentansprüche **dadurch gekennzeichnet, dass** die Resonanzfrequenz des Schwingkreises, der durch die Induktivität und einen von der Filterungsschaltung parallel gestellten Kondensator (15) gebildet, ist von der gesagten Filterungsschaltung und der Induktivität begrenzt ist, so dass sie bei weniger als 100 kHz liegt.
